# EUROPEAN PATENT APPLICATION

(11) **EP 1 011 288 A1**
(43) Date of publication of application: **21.06.2000**
(21) Application number: 99440071.1
(22) Date of filing: 12.04.1999
(51) Int. Cl.: H04Q 7/38, H04B 7/26

(54) **Method for transmitting control data with a variable rate between a mobile terminal and a fixed station**

(71) Applicant: ALCATEL, 75008 Paris (FR)
(72) Inventor: Neustadt, Alf, 70199 Stuttgart (DE)
(74) Representative: Scheer, Luc

(57) **Abstract**

The invention relates in particular to a method of transmitting data between a mobile terminal and a fixed station. The data is transmitted over two channels: a payload data transmission channel (DCH) and a control data transmission channel (CCH). According to the invention, whenever the transmission of payload data is interrupted, control data is transmitted at a rate which is a function of data that is indicative of the travel speed of the mobile terminal. The invention makes it possible to reduce interference between users and also to reduce the power consumption of mobile terminals.

## Description

The field of the invention is that of transmitting control data between a mobile terminal and a fixed station, e.g. in a CDMA type cellular network.

More precisely, the present invention applies to transmitting data in systems where, for communication between a mobile terminal and a fixed station, two transmission channels are used, one transmission channel for payload data and another transmission channel for control data.

The following description relates to the context of a CDMA type transmission network. In such a network, e.g. for communication in the up direction (from a terminal to the fixed station), the payload data to be transmitted (e.g. voice type data) is spread by means of a first spreading sequence allocated to the terminal. Control data is also transmitted from the mobile terminal to the base station, with the control data being spread by a second spreading sequence which is different from the first so as to constitute a control channel (also known as a pilot channel since it conveys reference symbols). Both the payload data and the control data are transmitted on the same carrier frequency.

Control data is transmitted for the following purposes:
. enabling the various paths followed by the transmitted signal (multipath transmission) to be summed to enable the transmitted signal to be separated from noise, in the manner conventionally implemented in a Rake type receiver, this processing generally being referred to as "path finding";
. enabling the base station to estimate the transmission channel to enable the transmitted payload data to be demodulated coherently, this channel estimation being performed after combining the various fingers of the Rake receiver; and
. controlling the power transmitted from the mobile terminal as a function of the power of the signal received at the fixed station both on the payload data channel and on the control data channel.

When there is no payload data to be transmitted, e.g. during periods of speaker silence, it is also known to transmit no data over the payload data transmission channel. This serves not only to reduce interference between a plurality of users, but also to reduce power consumption by the mobile terminal.

An object of the present invention is to improve existing transmission systems by enabling interference between users and power consumption in each terminal to be decreased even further whenever the transmission of payload data is interrupted.

This object, and others that appear below, is achieved by the fact that the control data is transmitted at a rate which is a function of data that is indicative of the travel speed of the mobile terminal.

Thus, control data is no longer continuously transmitted, but is transmitted only in discontinuous manner, with the periodicity of control data transmission being a function of a magnitude representative of the travel speed of the mobile terminal.

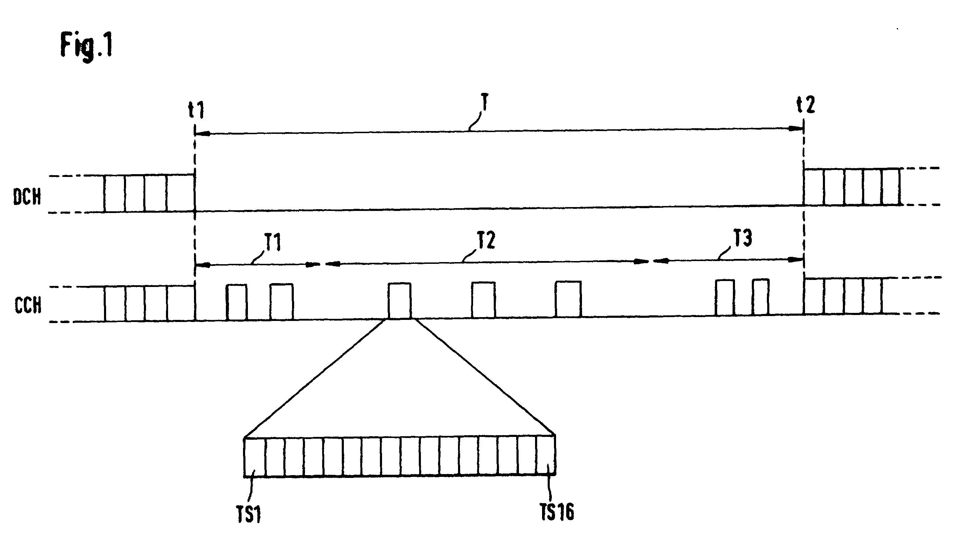

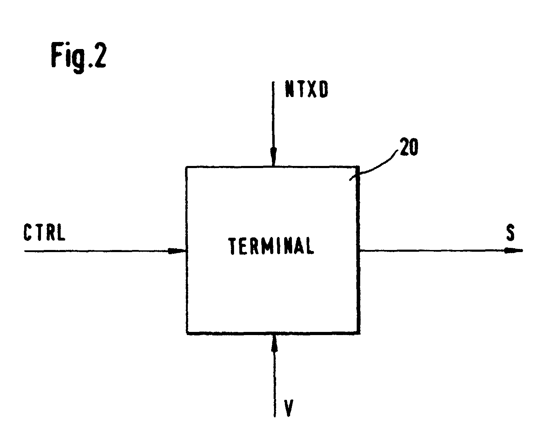

Other characteristics and advantages of the invention will appear on reading the following description of a preferred implementation, given by way of non-limiting illustration, and with reference to the accompanying figures, in which:
. Figure 1 shows signal packets transmitted over the payload and control channels when the method of the present invention is implemented; and
. Figure 2 shows one possible embodiment of the present invention.

The present invention relies on three observations that apply in the absence of payload data being transmitted:
. the first observation is that path-finding processing does not need to be performed frequently (this observation is of general applicability);
. the second observation is that there is no need to estimate the transmission channel since there is no payload data to demodulate, the sole purpose of estimating the transmission channel being to make it possible to perform coherent demodulation of the payload data; and
. the third observation concerns power control and is based on the travel speed of the mobile terminal relative to the fixed station. Three situations can be distinguished:

i) when the mobile terminal is moving slowly, there is no need to monitor its transmission power frequently since the power of the signal received by the fixed station varies only slowly;
ii) when the mobile terminal is moving fast, power control cannot be optimized and it is common practice to instruct the terminal to transmit at a medium power, with the transmission power level being changed only when the travel speed is reduced; and
iii) when the mobile terminal is traveling at medium speed, power control can act effectively, so instructions for changing transmission level should therefore be issued frequently.

It can thus be seen that in the absence of any payload data to be transmitted and for different mobile travel speeds, it is inappropriate to transmit control data at a single rate (where the term "rate" is used herein to avoid confusion in the mind of the reader both with "frequency" (in Hz) of data transmission and the "periodicity" (in time intervals) at which said data is transmitted) .

More precisely, for a terminal that is traveling at low speed or high speed (cases i) and ii)), transmitting control data at a low rate is satisfactory, while control data needs to be transmitted at a high rate when the mobile terminal is traveling at medium speed, so as to enable the transmission power of the terminal to be updated frequently.

The invention proposes taking advantage of this characteristic by transmitting control data at a rate which is a function of data that is indicative of the travel speed of the mobile terminal.

Accompanying Figure 1 shows signal packets transmitted over the payload channel and over the control channel while the method of the present invention is being implemented.

The payload data transmission channel is referenced DCH and the control data transmission channel is referenced CCH. Data frames are carried over these two channels, with each frame being represented by a rectangle. By way of example, each frame has 16 time slots TS1 to TS16 in each of the two channels. By way of example, these channels differ by using different spreading sequences.

Prior to a time t1, normal transmission of payload data takes place and control data is transmitted normally. As shown, the control data is transmitted, for example, in time slots TS1 to TS16 with each mobile terminal having a predefined time slot allocated thereto for a call. Each time slot comprises, for example, 8 symbols that have a duration of 625 µs, giving a frame duration of 10 ms.

At time t1, the transmission of payload data ceases for a duration T until time t2, e.g. because the speaker is silent. According to the invention, control data is no longer transmitted continuously, but spaced apart by periods of silence that are longer when the mobile terminal is traveling slowly or fast.

Thus, as shown in Figure 1, the rate at which control data is transmitted is not 100% as during the preceding period t1, but varies as a function of the travel speed of the mobile terminal. For a first period time T1, the control data transmission rate is about 50% (i.e. once every other time slot), whereas during a second time period T2 this rate is about 20% (i.e. once every five time slots), and during a third period T3, the rate is again about 50%..

At the end of the period T, at time t2, payload data transmission restarts and transmission of control data is likewise restarted at a rate of 100%.

Discontinuous transmission of control data makes it possible to reduce the power transmitted by a mobile terminal by about 12 dB, and this leads to an increase of battery endurance of about 40%.

Data that is indicative of the travel speed of the mobile terminal can be obtained in various different ways:
. it can be delivered directly to the terminal from an interface that is connected to the speedometer of the vehicle carrying the terminal;
. the speed at which the signal power transmitted by the terminal varies is also representative of the travel speed of the terminal since its transmission power is controlled by the fixed station; and
. the speed at which the power of the signal received by the mobile terminal varies is likewise representative of the travel speed of the terminal.

The invention is particularly advantageous for transmission in-the up direction, since it makes it possible not only to limit interference between users, but also to extend the battery endurance of the mobile terminal. Naturally, the invention also applies to transmission in the down direction, where the main advantage is similarly that of limiting interference.

As shown in Figure 2, the invention also relates to a mobile terminal for communicating with a fixed station over two channels: a payload data transmission channel and a control data transmission channel. The terminal comprises means 20 for transmitting control data, referenced CTRL, at a rate which, during an interruption in the transmission of payload data, is a function of data V that is indicative of the travel speed of the mobile terminal. Information as to whether the transmission of payload data is interrupted is delivered by a signal referenced NTXD. This flag NTXD enables or disables account being taken of the travel speed of the mobile terminal. The output signal S from the means 20 is then applied to transmitter means.

The invention also relates to a fixed station in a data transmission network that includes mobile terminals, with data being transmitted over two channels: a payload data transmission channel and a control data transmission channel; the fixed station comprising means 20 operative whenever transmission of payload data is interrupted, to transmit control data at a rate which is a function of data V that is indicative of the travel speed of the mobile terminal.

The invention is not solely applicable to CDMA mode transmission (in which, in particular, spreading sequence skips can be implemented) but also to transmission in TDMA mode, in which, for example, the same carrier frequency is used both for transmitting payload data and for transmitting control data, with the different kinds of data being interlaced in time.

## Claims

1. A method of transmitting data between a mobile terminal and a fixed station, said data being transmitted over two channels: a payload data transmission channel (DCH) and a control data transmission channel (CCH), the method being characterized in that, whenever the transmission of said payload data is interrupted, it consists in transmitting said control data at a rate which is a function of data (V) that is indicative of the travel speed of said mobile terminal.

2. A method according to claim 1, characterized in that it is applied to transmitting said control data from said mobile terminal to said fixed station.

3. A method according to claim 1 or 2, characterized in that it is applied to transmitting said control data from said fixed station to said mobile terminal.

4. A method according to any one of claims 1 to 3, characterized in that it is implemented in a CDMA type network.

5. A method according to any one of claims 1 to 3, characterized in that it is implemented in a TDMA type network.

6. A mobile terminal for communication with a fixed station over two channels: a payload data transmission channel and a control data transmission channel, the terminal being characterized in that it comprises means (20) operative when the transmission of said payload data is interrupted to transmit said control data (CTRL) at a rate which is a function of data (V) that is indicative of the travel speed of said mobile terminal.

7. A fixed station of a data transmission network including mobile terminals, said data being transmitted over two channels: a payload data transmission channel and a control data transmission channel, the station being characterized in that it comprises means (20) operative when the transmission of said payload data is interrupted to transmit said control data (CTRL) at a rate which is a function of data (V) that is indicative of the travel speed of said mobile terminal.
